# EUROPEAN PATENT APPLICATION

(11) **EP 4 745 662 A1**
(43) Date of publication of application: **20.05.2026**
(21) Application number: 24212964.1
(22) Date of filing: 14.11.2024
(51) Int. Cl.: G02F 1/35, G02F 1/39

(54) **OPTICAL PARAMETRIC MULTI-PASS APPARATUS, LASER APPARATUS AND METHOD OF GENERATING LASER RADIATION BY AN OPTICAL PARAMETRIC PROCESS**

(71) Applicant: Deutsches Elektronen-Synchrotron DESY, 22607 Hamburg (DE)
(72) Inventor: Lang, Tino, 22607 Hamburg (DE); Heyl, Christoph, 22607 Hamburg (DE)
(74) Representative: v. Bezold & Partner Patentanwälte - PartG mbB

(57) **Abstract**

An optical parametric multi-pass apparatus 100 for generating laser radiation by an optical parametric amplification or generation process, wherein pump radiation 1 is converted into signal radiation 3 and idler radiation 4, comprises a multi-pass device 10 having multiple mirror elements 11, which are arranged for providing multiple beam paths 12 extending from an input section 13 to an output section 14 of the multi-pass device 10, wherein the input section 13 is arranged for receiving the pump radiation 1 and the output section 14 is arranged for an output of the signal radiation 3 providing the laser radiation to be generated, and at least one optically non-linear crystal 20 being positioned in the multi-pass device 10 and being arranged for the optical parametric process employing the pump radiation 1, wherein the mirror elements 11 have a configuration providing multiple passes of the beam paths 12 through the at least one optically non-linear crystal 20, and the multi-pass device 10 is configured for a filtering along the beam paths 12 such that the idler radiation 4 is suppressed after at least one of the multiple passes of the beam paths 12 through the at least one optically non-linear crystal 20. Furthermore, a laser apparatus 200 and a method for generating laser radiation are described.

## Description

### Field of the invention

The invention relates to an optical parametric multi-pass apparatus for generating laser radiation by an optical parametric process, e.g., by optical parametric amplification, a laser apparatus including the optical parametric multi-pass apparatus, and a method of generating laser radiation by an optical parametric process. Applications of the invention are available e. g., in the fields of laser technology, in particular in ultra-fast lasers and techniques employing optical parametric amplification.

### Prior art

In the present specification, reference is made to the following prior art illustrating the technical background of the invention:
[1] J.-M. Heritier et al. "Cryogenically cooled Ti:sapphire amplifiers" in Proc. SPIE 6451, Solid State Lasers XVI: Technology and Devices, 64510V (20 February 2007);
[2] K. Michel et al. "kW picosecond thin-disk regenerative amplifier" in Proc. SPIE 10511, Solid State Lasers XXVII: Technology and Devices, 105110K (15 February 2018);
[3] Anne-Lise Viotti et al. "Multi-pass cells for post-compression of ultrashort laser pulses" in Optica 9, 197-216 (2022);
[4] T. Nagy et al. (2021) "High-energy few-cycle pulses: post-compression techniques" in Advances in Physics: X, 6:1, DOI: 10.1080/23746149.2020.1845795;
[5] T. Lang et al. "Impact of temporal, spatial and cascaded effects on the pulse formation in ultra-broadband parametric amplifiers" in Opt. Express 21, 949-959 (2013);
[6] H. Suchowski et al. (2011). "Adiabatic Frequency Conversion of Ultrafast Pulses" in Applied Physics B. 105. 697-. 10.1007/s00340-011-4591-3;
[7] Andrey Markov et al. "Broadband and efficient adiabatic three-wave-mixing in a temperature-controlled bulk crystal" in Opt. Express 26, 4448-4458 (2018); and
[8] WO 2023/036541 A1.

For generation of ultrashort laser pulses with a spectral bandwidth supporting few-cycle pulse durations and high average powers, mainly two technologies have been established in the last decades. These two technologies basically comprise a narrow-band femtosecond chirped pulse amplification system (CPA) in combination with either non-linear pulse-post compression (PPC) on the one hand, or optical parametric chirped pulse amplification (OPCPA) in broadband non-collinear phase-matching configuration (NOPA). Both methods have their individual advantages and disadvantages, as outlined in the following.

Whereas the post-pulse compression technology comes with outstanding high efficiencies which can exceed 90% and excellent spatial-spectral beam homogeneity, it suffers in spectral tunability and temporal pulse contrast. With more details, laser amplifiers are limited by their spectral range and amplification bandwidth. This leads to spectral gain narrowing limiting the pulse duration which can be amplified e.g. in Ytterbium-based systems to typically about a few 100 femtoseconds up to picoseconds. In addition, the so-called quantum defect, the difference between pump and amplification spectrum, leads to an unavoidable deposition of thermal energy in the laser crystal. Especially, for the broadest laser gain media supporting the shortest pulse, e.g. Ti:Sapphire, this practically results in a strong limitation of average power to only few 10s of Watts. Therefore, the pulse repetition rate for high pulse energies is limited to a few 100 Hertz [1].

The repetition rate limitations can be overcome to some extend by utilizing laser crystals with high thermal conductivity in special geometries such as thin-disk or Inno-slab. In addition, fiber laser amplifiers can reach high repletion rates due to their large volume to surface ratio. However, only a few laser materials are available supporting amplification to high average power in the kW range at a very limited number of spectral wavelengths and with bandwidths supporting pulse durations not shorter than hundreds of femtoseconds [2]. Shorter pulses durations can be reached in combination with post compression methods such as spectral broadening in multi-pass cells [3] or hollow core fibers [4].

On the other hand, OPCPA features an ultrabroad wavelength flexibility both in the choice of the spectral operation range and the wavelength tunability which only may be limited by the phase-matching bandwidth and the transparency range of available non-linear crystals. At the same time, the technology supports a very high temporal contrast. The generally known major drawbacks of the OPCPA technology are its rather weak efficiency (effectively well below 20%) as well as spatial-temporal inhomogeneities generated by the necessary NOPA configuration to achieve broad amplification bandwidth for few-cycle pulses amplification, so that optical parametric amplifiers are limited in terms of efficiency and therefore average power [5].

Although optical parametric amplifiers solve the problem of spectral amplification bandwidth and being very flexible in terms of the choice of the spectral amplification spectral range, they are only able to reach rather low amplification efficiencies of below 20%. In addition, in order to reach broadband amplification bandwidths special non-collinear phase-matching geometries are utilized which always results in spatial-temporal laser pulse inhomogeneities, such as angular dispersion, pulse front-tilt or non-uniform special and temporal content [5].

The low efficiency of conversational OPCPAs can be improved with adiabatic parametric amplifiers employing a so-called adiabatic phase-matching technique. Briefly, these techniques change gradually the phase-matching conditions such that a broader bandwidth is supported and back conversion is suppressed. Although, there are a few demonstrations of this type of parametric amplifiers are published [6] the technique suffers from low power scalability in case of aperiodic quasi-phase matching due to the limited aperture of the periodically poled crystals. Power scalability is in principle possible for adiabatic phase-matching by applying temperature gradients to long non-linear crystal [3], however, the possible bandwidth and the choice of crystals is limited and the use of a rather complex oven to realize the temperature gradient can influence the stability of the output.

Non-linear optical frequency conversion of laser radiation with a non-linear optical medium is disclosed in [8], wherein the non-linear optical medium is arranged for multiple propagations of the laser radiation in a multi-pass configuration. While the multi-pass configuration may have advantages as multiple conversion processes are obtained in the non-linear optical medium, there still may be limitations in terms of efficiency of the non-linear optical frequency conversion. For example, the efficiency of conversion processes in [8] may be limited to 20 %.

The above limitations of both technologies can be critical for various applications requiring ultra-short few-cycle laser pulses and high average powers, e.g. laser-plasma acceleration, attosecond and extreme ultraviolet (EUV) pulse generation, laser-based machining, multi-photon microscopy and high-field physics. Furthermore, the disadvantages described above also occur in related technologies using optical parametric processes, like four-wave mixing or optical parametric generation, in a corresponding manner.

### Objective of the invention

The objective of the invention is to provide an improved optical parametric multi-pass apparatus, an improved laser apparatus including the optical parametric multi-pass apparatus, and/or an improved method of generating laser radiation by an optical parametric amplification or generation process, being capable of avoiding limitations of conventional techniques. In particular, the objective of the invention is to provide the optical parametric multi-pass apparatus, the laser apparatus and/or the method of generating laser radiation with at least one of increased spectral bandwidth, improved variability in selecting spectral ranges of operation, increased efficiency of parametric energy conversion, increased average output power, improved spatial and/or temporal pulse characteristics and improved power scalability.

### Brief summary of the invention

These objectives are correspondingly solved by an optical parametric multi-pass apparatus, a laser apparatus including the optical parametric multi-pass apparatus, and a method of generating laser radiation by an optical parametric process, comprising the features of the independent claims, respectively. Preferred embodiments and applications of the invention arise from the dependent claims.

According to a first general aspect of the invention, the above objective is solved by an optical parametric multi-pass apparatus (optical parametric multi-pass cell, OPMPC), being configured for generating laser radiation by an optical parametric amplification or generation process, wherein pump radiation is converted into signal radiation and idler radiation. The optical parametric multi-pass apparatus comprises a multi-pass device (or: multi-pass cell, MPC) having multiple mirror elements, which are arranged for providing one or multiple beam path(s) extending from an input section to an output section of the multi-pass device, wherein the input section is arranged for receiving the pump radiation and the output section is arranged for an output of the signal radiation providing the laser radiation to be generated. Furthermore, the optical parametric multi-pass apparatus comprises at least one optically non-linear crystal being positioned in the multi-pass device and being arranged for the optical parametric process employing the pump radiation. The mirror elements of the multi-pass device have a configuration providing multiple passes of the beam paths through the at least one optically non-linear crystal.

According to the invention, the multi-pass device is configured for a filtering along the beam path(s) such that the idler radiation is suppressed after at least one of the multiple passes of the beam path(s) through the at least one optically non-linear crystal. Generally, the idler radiation is a light field component created with the optical parametric process in the at least one optically non-linear crystal, which light field component is not of interest for the output of the optical parametric multi-pass apparatus. Depending on the application of the invention, the idler radiation may comprise a short or long wavelength component compared with the signal radiation.

The filtering of the idler radiation may comprise e.g., a spectral and/or a spatial filtering. In particular, the term "spectral filtering" may refer to an adjustment of the spectral optical transmission of the multi-pass device such that the optical transmission in at least one spectral range, preferably covering at least a part of the spectrum of the idler radiation created at the at least one optically non-linear crystal, is reduced compared with the optical transmission outside said at least one spectral range. Thus, the multi-pass device may be described as a waveguide having a spectral optical transmission gap, where the optical transmission of the idler radiation is reduced. Advantageously, there are no particular quantitative requirements on the spectral filtering, i.e., on the degree of transmission reduction, which can be selected in dependency on the particular application conditions, e.g. the efficiency of energy conversion to be obtained.

The term "spatial filtering" may refer to deflecting the idler radiation out of the multi-pass device, e.g. as a result of setting the direction of the idler radiation in the at least one optically non-linear crystal and/or by a spectrally selective reflecting element. As a further option, the different divergence of signal, pump and idler radiation can be utilized for idler removal. As the idler radiation typically has a very different wavelength than signal and pump radiation, the idler radiation is typically not mode-matched to the eigenmode of the MPC. Therefore, by simply placing suitable beam apertures inside at least one (or multiple) beam paths inside the MPC, a portion of the idler can be removed via spatial filtering.

The OPMPC provides multiple passes through one or more short birefringent non-linear crystals placed inside the MPC. The non-linear crystals allow for the parametric conversion process from pump to the signal and idler pulses. This process is efficient for non-linear crystals with sufficiently high non-linear coefficient (deff) and if momentum conservation is fulfilled by ensuring critical or non-critical phase-matching.

According to a second general aspect of the invention, the above objective is solved by a laser apparatus, being configured for generating laser radiation, comprising a pump laser source device being arranged for generating pump radiation, and the optical parametric multi-pass apparatus according to the first general aspect of the invention or an embodiment thereof, wherein the optical parametric multi-pass apparatus is arranged for receiving the pump radiation and for generating the signal radiation.

The pump laser source device preferably may be configured for generating pulsed pump radiation (series of pump pulses). The pulsed pump radiation can be provided by a femto- or picosecond CPA laser system. In order to provide parametric processes, e.g. parametric amplification, in a spectral range below 1 µm wavelength, it may be preferred to frequency double or triple an output of a pump laser system for providing the pulsed pump radiation.

According to a third general aspect of the invention, the above objective is solved by a method of generating laser radiation, comprising the steps of generating pump radiation with a pump laser source device, generating the signal radiation with an optical parametric multi-pass apparatus according to the first general aspect of the invention or an embodiment thereof, and output of the signal radiation.

With preferred examples, the optical parametric multi-pass apparatus may comprise e.g., a multi-pass cell optical parametric amplifier (OPMPC), or a multi-pass cell optical parametric generation apparatus. While particular reference is made in the following to the OPMPC for illustrating preferred features or advantages of the invention, it is noted that these preferred features or advantages apply in an equal manner to the other examples. The optical parametric multi-pass apparatus is not limited to these examples, but may be configured for implementing other optical parametric processes pumped with a pump radiation and including a radiation conversion generating idler radiation, generally comprising e.g., a three-wave difference mixing process, such as optical parametric generation or optical parametric generation in a single or cascaded process.

The inventive OPMPC may combine the advantages of both, optical parametric processes, like optical parametric amplification, and multi-pass post pulse compression by avoiding their disadvantages almost entirely. In the optical parametric multi-pass apparatus, the at least one optically non-linear crystal is combined with the multi-pass device. The multi-pass device is configured for folding the pump radiation beam and a further beam, like a seed radiation beam in case of OPA, for the parametric conversion in order to pass through the at least one optically non-linear crystal multiple times.

The term "suppressing" the idler wave refers to extracting at least a part of the idler wave out of the multi-pass device after at least one pf the passes, preferably after each of the passes, of the pump radiation through the at least one optically non-linear crystal. The inventors have found that the efficiency limitations that may occur with the technique of [8], are caused by a back conversion of the idler wave in subsequent passages through the non-linear optical medium. Advantageously, with the inventive filtering (extraction) of the idler radiation, the back conversion process is suppressed. Accordingly, a back transfer of energy from the idler and the signal wave to the pump radiation is reduced or even completely excluded, so that the pump radiation can be completely or nearly completely used for the energy conversion in the optical parametric process and the efficiency of the energy conversion is essentially increased up to e.g., 60 % or more.

The arrangement of the at least one optically non-linear crystal in the multi-pass device and the repeated propagation of the laser radiation light fields through the at least one optically non-linear crystal allows the provision of a configuration, in particular a selection of the thickness of the at least one optically non-linear crystal per pass, such that the optical parametric process is stopped for the pass before the back conversion or other efficiency limiting processes, like hole-burning, may occur.

Further advantages of the optical parametric multi-pass apparatus in comparison to conventional optical parametric processes, like optical parametric amplification or post pulse compression, respectively, may comprise the availability of a flexible wavelength range and wavelength tenability, a smooth spectral shape, an excellent temporal contrast, and an excellent beam quality and spectral-spatial homogeneity without spatial-temporal coupling (pulse front tilt and spatial/angular dispersion) .

According to a preferred embodiment of the optical parametric multi-pass apparatus, the multi-pass device may be configured for the filtering by providing at least one filter element in the at least one of the beam paths, said at least one filter element being adapted for a selective reflection or transmission of the pump radiation, the seed radiation and signal radiation and being further adapted for a correspondingly selective transmission or absorption of the idler radiation, a geometric separation of the idler radiation out of the beam path, a selective reflection of the idler radiation out of the beam path and/or a selective temporal shift of the idler radiation in the beam path, preferably by applying a relative group delay between idler and signal radiation pulses within at least one round trip in the multi-pass device, said relative group delay being larger than the signal radiation pulse duration. In particular, if the filter element has an increased selective spectral reflection for the pump radiation, seed radiation and signal radiation, it has an increased selective spectral transmission for the idler radiation, or vice versa.

Filter elements with spectrally selective transmission, absorption and/or reflection may have particular advantages in terms of integration into the multi-pass device and adjusting the degree of idler suppression. The geometric separation of the idler radiation out of the beam paths may have particular advantages in terms of facilitating a complete suppression of the idler wave and facilitating the design of the mirror elements. The selective reflection of the idler radiation out of the beam path can be obtained e.g., by a choice of phase-matching type combined with Brewster interfaces of the optically non-linear crystals in the beam paths of the multi-pass device and/or by additional Brewster windows. Applying the selective temporal shift, in particular temporal delay, of the idler radiation in the beam path, while the signal radiation is kept without a temporal shift, may have advantages in terms of avoiding transmission loss of the light fields circulating in the multi-pass device.

A filter element may be provided by an additional reflective or transmissive element in at least one of the beam paths of the multi-pass device or by one of the mirror elements of the multi-pass device. Preferably, multiple filter elements may be provided, thus allowing a stronger suppression the idler radiation. The filter elements may be provided in at least one of the beam paths of the multi-pass device, or particularly preferred each of the filter elements may be provided in another one of the beam paths of the multi-pass device.

According to a particularly preferred embodiment, the at least one filter element may comprise a filter layer, in particular a dielectric coating, at least one of the mirror elements, and/or a coated interface provided by the at least one optically non-linear crystal and/or an additional window arranged in the at least one beam path and/or an idler radiation absorbing gas arranged in the at least one beam path. Advantageously, the at least one filter layer, the coated interface, the window and/or the gas may be provided without a need of a substantive change of the multi-pass device configuration.

If, according to a further preferred embodiment of the invention, multiple optically non-linear crystals are included in the optical parametric multi-pass apparatus, advantages are obtained by distributing the optical parametric process on multiple non-linear media.

Particularly preferred, the optically non-linear crystals may be serially arranged such that each of the multiple passes of the beam paths runs through at least two of the optically non-linear crystals. Advantageously, this increases the energy conversion rate per pass. Alternatively, each or sub-groups of the multiple optically non-linear crystals may be arranged in a different one of the multiple beam paths of the multi-pass device (parallel arrangement of the optically non-linear crystal).

With the serially arranged optically non-linear crystals, the optically non-linear crystals preferably may be oriented such that an overall spatial walk-off of the pump radiation and signal radiation passing through the serially arranged optically non-linear crystals is compensated. Alternatively or additionally, with the serially arranged optically non-linear crystals, the optically non-linear crystals may be arranged with an inter-crystal distance between adjacent non-linear crystals preferably being selected such that a strength of Kerr-lens focusing is reduced by diffraction between adjacent non-linear crystals and deviations from non-linear mode-matching in the multi-pass device are reduced.

These configurations allow for the following particular advantages. Walk-off effects and high-order spatial non-linear inhomogeneities may be suppressed by using the multiple optically non-linear crystals in alternating walk-off direction. Conversion efficiency and beam quality may be optimized by suppression of spatial hole burning utilizing a spatial mixing effect in a non-relay imaging configuration of the multi-pass device, preventing relay imaging conditions from any plane across the multi-pass cell to the same plane upon consecutive passes through the multi-pass cell. Conversion efficiency may be maximized by temporal walk-off management of the pump radiation and a further beam, like the seed radiation by using special engineered MPC mirrors and/or phase plates. The free aperture of the optically non-linear crystals may be minimized by a multi mirror multi-pass device setup improving bandwidth and conversion efficiency of the optical parametric process by a gradual or adiabatic change of the phase-matching condition for each pass by controlled deviation from a strict linear MPC pattern in the critical optical axis of the birefringent optically non-linear crystal.

Accordingly, with a further advantageous embodiment of the invention, the multi-pass device may have a configuration deviating from a relay imaging configuration. Advantageously, the non-relay imaging configuration of the multi-pass device provides the spatial mixing effect between the subsequent multi-pass device passes, so that spatial pump pulse depletion and back-conversion as well as spatial-spectral inhomogeneities and beam quality degradation due to the non-linear interaction of the pump and seed pulses are suppressed.

Advantageously, the mirror elements of the multi-pass device may be arranged such that an angle between subsequent passes through the at least one optically non-linear crystal mainly changes in a non-critical crystal axis of the at least one optically non-linear crystal, said non-critical crystal axis being non-critical for phase-matching of the pump and signal radiation. The angle between subsequent passes through the at least one optically non-linear crystal may change precisely in the non-critical crystal axis, or alternatively, small variation in the critical axis may be allowed and/or can be even advantageous for optical parametric processes using ultra-short pulses.

Employing multiple optical non-linear crystals may have particular advantages for allowing at least one of the following preferred features of the optical parametric multi-pass apparatus. Firstly, a thickness of each optically non-linear crystal may be selected to be smaller than twice of a coherence length of phase-matching of pump radiation and the idler radiation for an intended conversion bandwidth, e.g., amplification bandwidth. Accordingly, the thickness of each optically non-linear crystal may be selected such that a phase shift between the pump radiation and the signal radiation per propagation through a crystal is less than *π*/2. As an example, the thickness of each optically non-linear crystal may be selected in a range equal to or below 3 mm, e. g. 2 mm or less, or 1 mm or less, and above 50 µm.

Alternatively or additionally, a thickness of each optically non-linear crystal may be selected such that there is no inset of back conversion in at least one single one of the multiple passes of the beam paths through the at least one optically non-linear crystal, in particular before the idler radiation is extracted. This variant may have particular advantages for the collinear configuration embodiment of the invention, according to which the multiple mirror elements may be arranged for a collinear configuration with one single beam path of the pump radiation and the signal radiation. A preferred thickness of the at least one optically non-linear crystal per pass may be selected based on experimental tests and/or numerical simulations.

Advantageously, with the parallel arrangement of the optically non-linear crystal and the collinear configuration embodiment, the optically non-linear crystals may be arranged with a mutual displacement such that each of the multiple passes of the single beam path selectively runs through another one of the optically non-linear crystals.

With an alternative advantageous configuration, the multiple mirror elements may be arranged for a non-collinear configuration with a first beam path of the pump radiation (and optionally seed radiation) and a different second beam path of the signal radiation, wherein the first and second beam paths overlap in the at least one optically non-linear crystal. With the non-collinear configuration, the multi-pass device comprises a first group of pump mirror elements and a second group of seed or signal mirror elements spanning the different beam paths. The non-collinear configuration may have particular advantages for spatial filtering the idler radiation by deflecting the idler radiation out of the multi-pass device.

According to a further preferred embodiment of the invention, the optical parametric multi-pass apparatus may include a group delay adjustment configuration being adapted for a group delay adjustment of the pump radiation, the signal radiation and the idler radiation. Particularly preferred the group delay adjustment configuration may be provided by at least one of a mirror coating of at least one of the mirror elements of the multi-pass device, a creation of geometric path length differences in the non-collinear configuration, an insertion of delay plates, e.g., calcite plates, in at least one of the beam paths of the multi-pass device, and a combination of non-linear crystals passed per pass through the multi-pass device.

Advantageously, multiple optical parametric processes are available which may be implemented with the invention. According to a first preferred variant, the optical parametric multi-pass apparatus may be adapted for an optical parametric amplification, wherein the multi-pass device is arranged for receiving and superimposing the pump radiation and seed radiation and the at least one optically non-linear crystal is arranged for converting the pump radiation and the seed radiation into the signal radiation and the idler radiation.

Accordingly, with this amplification embodiment, the optical parametric multi-pass apparatus of the above first aspect of the invention may comprise an optical parametric amplification apparatus, being configured for generating amplified laser radiation by the optical parametric amplification, wherein pump radiation and seed radiation are superimposed and converted into signal radiation and idler radiation. The optical parametric amplification apparatus comprises the multi-pass device having the multiple mirror elements, which are arranged for providing the multiple beam paths extending from the input section to the output section of the multi-pass device, wherein the input section is arranged for receiving the pump radiation and the seed radiation and the output section is arranged for the output of the signal radiation providing the amplified laser radiation to be generated. Furthermore, the optical parametric amplification apparatus comprises the at least one optically non-linear crystal being positioned in the multi-pass device and being arranged for the optically non-linear superposition of the pump radiation and the seed radiation therein. The mirror elements have the configuration providing multiple passes of the beam paths through the at least one optically non-linear crystal, and the multi-pass device is configured for the spectral filtering along the beam paths such that the idler radiation is suppressed after at least one of the multiple passes of the beam paths through the at least one optically non-linear crystal.

Similar to conventional OPAs or OPCPAs, the optical parametric multi-pass apparatus preferably employs an ultrashort pump laser source and a suitable seed source. In the parametric amplification process the pulse energy is transferred from the strong pump pulses to signal and idler pulses. Since the signal pulses are seeded they will adopt to the phase of the seed whereas the idler pulses carry the phase information of both pump and signal pulse. According to the principle of optical parametric amplification, the wavelength of the pump pulses is always shorter than the wavelength of the amplified signal and idler pulses. Each generated signal photon during the parametric amplification process will also generate a respective idler photon. The energy distribution between signal and idler consequently depends on the respective photon energies (Manley-Rowe condition). In contrast to laser amplifiers the parametric process by definition applies no heat to the crystal and therefor allows for high repetition rates and average powers. In practice, a small amount of pump, signal or idler may be absorbed in the crystal by linear absorption or two photon absorption (TPA). Accordingly, the optimum non-linear crystal may show a high linear and non-linear transparency for all the wavelengths involved.

With the amplification embodiment, a seed laser source device may be provided by a seed laser or by a supercontinuum generation source, in particular utilizing a small portion of the CPA pump pulses to drive a filamentation process in a suitable bulk crystal, such as YAG for example. Alternatively, other methods for generating seed laser radiation can be utilized, such as supercontinuum generation using photonic crystal fibers, or frequency shifters like Raman shifters. Also, seeding narrow-band using a CW laser can be useful for CEP-stable pulse generation.

For example, the seed radiation pulses may be already positively chirped. Depending on the desired amplification bandwidth and the later pulse compression strategy, an additional negative or positive pre-chirp of the seed radiation pulses may be required. Possible elements for realizing the pre-chirp may comprise chirped mirrors, prisms, gratings or grating stretchers and/or compressors. Additionally or alternatively, a dazzler device may be a flexible option.

With the amplification embodiment, the input section of the multi-pass device preferably may include a dichroic beam combiner, which is adapted for superimposing the pump and seed radiation in time and space. Additionally or alternatively, the output section of the multi-pass device preferably may include a dichroic beam splitter, which is adapted for spectrally separating the pump and signal radiation.

According to a second preferred variant of applications, the optical parametric multi-pass apparatus may be adapted for optical parametric generation, wherein the multi-pass device is arranged for receiving the pump radiation and the at least one optically non-linear crystal is arranged for converting the pump radiation into the signal radiation and the idler radiation.

According to a third preferred variant of applications, the optical parametric multi-pass apparatus may be adapted for a four wave mixing process, wherein the multi-pass device is arranged for receiving the pump radiation comprising a first pump laser radiation and a second pump laser radiation and the multi-pass device is arranged for superimposing the first pump laser radiation and the second pump laser radiation and the at least one optically non-linear crystal is arranged for converting the first pump laser radiation and the second pump laser radiation into the signal radiation and the idler radiation.

Features disclosed in the context of the optical parametric multi-pass apparatus and embodiments thereof also represent preferred features of the inventive laser apparatus and/or method of generating laser radiation and embodiments thereof. The aforementioned aspects and inventive and preferred features, in particular with regard to the configuration of the apparatuses as well as the dimensions and compositions of individual components being described in relation to the apparatuses, also apply for the methods. The preferred embodiments, variants and features of the invention described above are combinable with one another as desired.

### Brief description of the drawings

Further details and advantages of the invention are described in the following with reference to the attached drawings, which schematically show in:
- Figure 1:: features of embodiments of the laser apparatus of the invention, including a collinear configuration embodiment of the inventive optical parametric multi-pass apparatus;
- Figure 2:: momentum and energy diagrams illustrating the optical parametric amplification;
- Figure 3:: multi-pass device beam paths patterns according to various configurations of the inventive optical parametric multi-pass apparatus;
- Figure 4:: further features of a collinear configuration embodiment of the inventive optical parametric multi-pass apparatus;
- Figures 5 to 7:: simulation results illustrating features of the optical parametric multi-pass apparatus of Figure 4; and
- Figures 8 to 10:: schematic features of a non-collinear configuration embodiment of the inventive optical parametric multi-pass apparatus.

### Preferred embodiments of the invention

Features of preferred embodiments of the invention are described in the following with exemplary reference to the amplification embodiment of the invention, wherein the optical parametric multi-pass apparatus is an optical parametric amplification apparatus. The invention is not restricted to the amplification embodiment, but can be implemented with alternative applications of optical parametric processes, like for optical parametric generation, wherein the features of the optical parametric multi-pass apparatus are provided in an analogue manner like in the amplification embodiment.

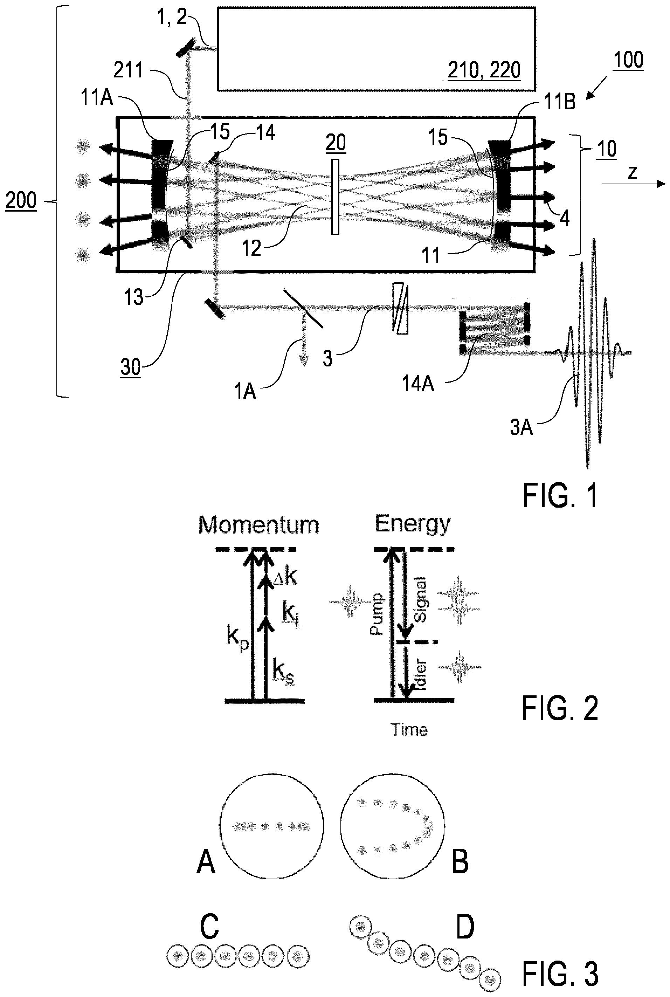

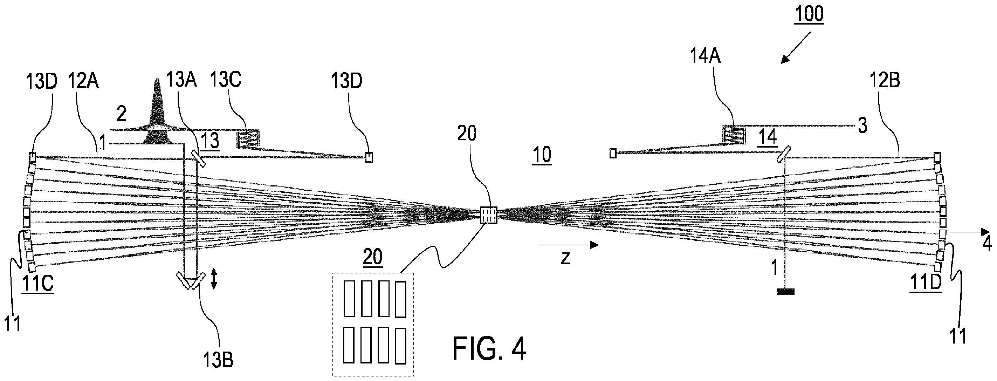

Figures 1 shows an embodiment of an inventive laser apparatus 200 including an inventive optical parametric multi-pass apparatus 100. It is emphasized that the optical parametric multi-pass apparatus is an independent subject of the invention (as shown in Figures 4 and 8 to 10), which can be combined with different laser source devices, e.g. for providing pump radiation. Furthermore, details of the optical setup may be provided as it is known per se from conventional laser setups. For instance, a control device for controlling at least one of the laser apparatus and the optical parametric multi-pass apparatus, a detector device for monitoring the light fields in the laser apparatus, and/or a conditioning device for setting environmental conditions, e.g., temperature, pressure and/or provision of a working gas, of the setup may be provided (not shown). Features described with reference to one of the Figures correspondingly may be employed with embodiments shown in another one of the Figures.

Details of optical parametric amplification are not described as far as they are known per se from prior art. Furthermore, the multi-pass device as such, in particular the mirror elements, the input section and/or the output section thereof, may be implemented as it is known from multi-pass cells described in prior art. The invention is not restricted to the illustrated particular configurations of the optical parametric multi-pass apparatus, but rather can be varied, e. g., with regard to the geometry and configuration of the multi-pass device and/or the configuration of the pump and/or seed laser source devices and/or the configuration of the at least one optically non-linear crystal.

Figure 1 schematically illustrates a collinear configuration embodiment of the inventive laser apparatus 200 including the amplification embodiment of the inventive optical parametric multi-pass apparatus 100. The laser apparatus 200 comprises a pump laser source device 210 providing pump radiation 1, a seed laser source device 220 providing seed radiation 2, and the optical parametric multi-pass apparatus 100 with the multi-pass device 10 and an optically non-linear crystal 20.

Both of the pump and seed radiations 1, 2 comprise pulsed laser radiation. With practical examples, the pump laser source device 210 may comprise a pulse laser system of one of the manufacturers Light Conversion, Amplitude or Trumpf, and the seed laser source device 220 may be derived via white light generation using a portion of the pump laser source . The pump laser pulses are generated e.g., with a pump laser wavelength of 1030 nm, a pump laser pulse energy of 1 mJ, and a pump laser pulse duration of 1 ps. The seed laser pulses comprise broadband pulses, e. g. with a seed spectrum resulting from a seed pulse duration 10 fs (TL) and a 5000 fs² linear chirp, and a seed pulse energy of 10 nJ.

The multi-pass device 10 of the optical parametric multi-pass apparatus 100 comprises two groups of mirror elements 11. The groups of mirror elements 11 are arranged spaced apart from each other with a mutual distance along a longitudinal direction (axial direction, z-direction) of the multi-pass device 10. The mirror elements 11 span multiple beam paths 12, extending from the input section 13 to the output section 14. Each mirror element may comprise a mirror substrate and a dielectric coating on the mirror substrate. As known from conventional multi-pass-cells, the mirror elements 11 may be provided by reflector sections of compact curved mirrors 11A, 11B, as shown in Figure 1, or each of the mirror elements may be provided by a single reflector (see e.g., Figures 4 or 9/10 below). With the first variant, the mirror elements 11 are integrated parts of the curved mirrors 11A, 11B, each of which having one common mirror substrate and one common dielectric coating.

For suppressing the idler radiation 4 in the multi-pass device 10 by spectral filtering, the mirror elements 11, in particular the dielectric coatings thereof (shown for illustrative purposes separately from the mirror substrates in Figure 1), simultaneously provide spectrally selective filter elements 15. To this end, the dielectric coatings are designed for a reflection of the pump radiation 1 and signal radiation 3 and a transmission of the idler radiation 4. The idler radiation 4 is extracted from the multi-pass device 10 at each mirror element 11. Alternatively, the back-conversion can also be suppressed by temporally delay of the idler radiation 3 from the signal radiation 4 in the multi-pass device. This can be done by a applying a relative group delay between idler and signal radiation pulses larger than the signal pulse duration within at least one round trip in the multi-pass device, e.g., by arranging a birefringent or dispersive material in the beam path. Another option for idler removal is the choice of a suitable gas, like e.g, CO₂ present in the MPC device absorptive at the idler wavelength.

With a practical example, the multi-pass device 10 may have the following specification. The mirror elements 11 comprise high reflective mirrors, which have a high reflectivity for the wavelengths of the pump and seed radiations, e. g. in a range from 1020 nm to 1600 nm, and a high transmission for a wavelength of idler radiation created by optical parametric amplification in the optically non-linear crystals 10, e. g. in a range from 3 µm to 4.5 µm. The high reflective mirrors (without the non-linearities of the optically non-linear crystal 20) may provide a transmission of the multi-pass device 10 of e.g., 80 %. Each of the curved mirrors 11A, 11B may have a mirror radius of 4 m, and the curved mirrors 11A, 11B may have a mutual axial distance of about 3 m, e.g., 2.76 m. The mirror elements 11 are adjusted for providing e.g., 20 passes through the multi-pass device 10. The multi-pass device 10 may include a group delay adjustment configuration for a group delay adjustment along the beam paths 12, adding e.g., 926 fs pump - seed group delay at each round trip through multi-pass device 10. The group delay adjustment configuration may be provided e.g. by adding a suitable calcite crystal in the optical beam path of pump and signal resulting in a temporal pulse delay of e.g., 46.3 fs.

For providing the multi-pass device 10 in an evacuated environment or an environment with a predefined inert gas and/or idler absorbing gas, the multi-pass device 10 may be arranged in a gas-tight, in particular pressure-tight, container 30, e.g., in a vacuum vessel connected with a vacuum pump and provided with windows for incoupling and outcoupling radiation into or out of the multi-pass device 10. The pressure in the container 30 may be set to e.g., 1 bar.

With the collinear embodiment of the invention, both of the pump and seed radiations 1, 2 are superimposed on a common input beam path 211 deflected into the multi-pass device 10 via the input section 13 thereof. The input section 13 is provided by a reflector element deflecting the input beam path 211 onto a first one of the mirror elements 11. Subsequently, the pump and seed radiations 1, 2 follow multiple passes through the multi-pass device 10, each including a propagation through the optically non-linear crystal 20.

The pump and seed radiations 1, 2 are superimposed in time and space. For providing the superposition, a dichroic beam combiner may be employed (not shown in Figure 1, see e.g., dichroic beam combiner 13A in Figure 4), which is reflective for the pump wavelength and transmissive for the signal or vice versa. The temporal overlap can be optimized by a delay stage (not shown in Figure 1, see e.g., delay stage 13B in Figure 4) in one of the beam paths before they are combined. Transverse mode matching before combining the two beams may be provided, e.g., by focussing both beams by a telescope optic (not shown) with mode-matching mirrors into the multi-pass device 10 in order to be matched to the Eigenmode of the multi-pass device 10.

The optically non-linear crystal 20 is positioned in a centre plane of the multi-pass device 10. While Figure 1 shows for illustrative purposes a single optically non-linear crystal 20 extending in the centre plane over all beam paths. Alternatively, multiple optically non-linear crystals 20 may be arranged side by side in the centre plane of the multi-pass device 10, so that each beam path propagates through one set of the optically non-linear crystals 20, and/or multiple optically non-linear crystals 20 may be serially arranged, as described below. Alternatively, there might be multiple beams going through one single set of non-linear crystals (see Figure 4, reference numeral 20).

The optically non-linear crystal 20 comprises a birefringent material with a non-linear coefficient (d_{eff}) that is sufficiently high for allowing the generation of signal radiation 3 and idler radiation 4 by an interaction of the pump radiation 1 and the seed radiation 2 and an energy and momentum conversion process transferring energy and momentum from the pump radiation 1 to the signal radiation 3 and the idler radiation as illustrated in Figure 2. The optically non-linear crystal 20 has a thickness being sufficiently thin for broadband phase matching at a given momentum miss-match between pump, signal and idler Δk. Preferably, a sub-millimeter to very few millimeters thickness (along beam propagation through the crystal) may be used, e.g., a thickness of 250 µm. With a practical example, the optically non-linear crystal 20 is a KTP (potassium titanyl phosphate) Type II crystal phase-matched with alternating theta = 45.7°, having a linear absorption spectrum for pump, signal and idler radiation.

In operation, the pulsed pump radiation 1 is generated with the pump laser source device 210 and the broadband pulsed seed radiation 3 is generated with the seed laser source device 220. The pump pulses and the seed pulses are sent collinearly into the multi-pass device 10 containing the one or multiple optically non-linear crystals 20. With each passage through the optically non-linear crystal 20, a portion of pump energy is transferred to the signal radiation 3 and the idler radiation 4. Back-conversion is suppressed efficiently by the extraction of the pulses of the idler radiation 4 at each of the mirror elements 11.

After propagation through the multi-pass device 10, i.e. after reflection at all mirror elements 11, the residual pump radiation 1 and the amplified signal radiation 3 are extracted from the multi-pass pattern via the output section 14 to be separated similar as the pump and seed pulses were combined. Subsequently, the signal radiation 3 may be temporally compressed by applying the opposite dispersion, e.g., by chirped mirrors 14A and/or by bulk material, thus generating compressed pulses 3A of the signal radiation 3.

The multi-pass device 10 is configured for creating a certain pattern of reflecting sections on the curved mirrors 11A, 11B. The pattern of reflecting sections is set by the configuration and arrangement of the mirror elements, i. e., the shape of the curved mirrors 11A, 11B and the alignment of the input peam into the multi-pass cell device. Various patterns of reflecting sections are available for different phase-matching conditions, as exemplified in Figure 3. According to Figure 3A, a Herriot type linear pattern is shown, while Figure 3B illustrates a half-pattern which is adapted for optimizing in- an out-coupling and phase-matching conditions. Figures 3C and 3D are similar to Figures 3A and 3B, but using mirror arrays allowing for smaller crystal apertures and flexible multi-pass device patterns. Alternatively, a circular Herriott pattern of reflecting sections on the curved mirrors 11A, 11B can be created (not shown).

Since the phase-matching in the optically non-linear crystal 20 is sensitive to the critical axis of the birefringent crystal, a linear multi-pass pattern according to Figures 3A or 3D is beneficial, oriented such that an angle between subsequent passes only changes in the respective non-critical crystal axis. An intended adiabatic change of the phase-matching angle between sub-sequent passes is applicable in a multi-pass cell realizing a controlled angle change in the critical axis of the non-linear crystals either by going out of the strict linear multi-pass pattern or by using multiple separate mirrors instead of two large mirrors.

Figure 4 is an alternative representation of features of embodiments of the inventive optical parametric multi-pass apparatus 100. Parts of the optical parametric multi-pass apparatus 100 which are correspondingly shown in Figure 1 are indicated with equal reference numerals like in Figure 1. Parameters of the optical parametric multi-pass apparatus 100 of Figure 4 may be implemented as mentioned with reference to Figure 1. The optical parametric multi-pass apparatus 100 is shown with the input section 13 and the output section 14 setup allowing pump and seed beam combination and separation as well as seed beam dispersion management. The seed pulses of seed radiation 2 are chirped by the dispersive mirrors 13C in order to optimize the temporal overlap with the pump pulses of pump radiation 1. The temporal delay between pump and seed pulses is optimized by the optical delay line 13B. The pump and the seed radiations 1, 2 are combined in the dichroic mirror 13A and focused by the mode-matching mirrors 13D into the first pass of the multi-pass device 10.

As described with reference to Figure 1, the multi-pass device 10 comprises multiple mirror elements 11 spanning beam paths from the input section 13 to the output section 14. With the setup of Figure 4, two linear arrays 11C, 11D of focusing mirror elements 11 are employed. Each mirror element has a diameter of e.g., about 12,5 mm. The mirror elements 11 are aligned such that all focused beams are crossing each other in multiple, e.g. two, spots in a focusing plane, in particular a centre plane, between the arrays 11C, 11D perpendicular to the axial direction z, thus allowing for reasonable crystal apertures at the optically non-linear crystals 20.

The mirror elements 11 are highly reflective for the pump, seed and signal pulses of pump, seed and signal radiation 1, 2, and 3 and transparent for the generated idler pulses of idler radiation 4.

The mirror radius of curvature and distance may be set to ensure a similar beam size of pump and seed beams for each pass through the optically non-linear crystals 20 in non-relay imaging configuration.

Multiple optically non-linear crystals 20 are arranged in or near the focusing plane as an array of optically non-linear crystals 20. As illustrated with the enlarged schematic insert view of Figure 4 (not to scale), multiple, e.g., two, rows of optically non-linear crystals are provided in parallel, each including multiple optically non-linear crystals arranged in series. With the illustrated example, in each of the two focal crossing points of the multi-pass device 10, four subsequent crystals are arranged with alternating walk-off direction and the optical axis oriented orthogonal to the linear mirror pattern. Each of the eight optically non-linear crystals 20 has a thickness of e.g., 250 µm. A crystal separation between neighbouring optically non-linear crystals 20 along axial direction is e.g., 25 mm.

The optical parametric multi-pass apparatus 100 is operated as described with reference to Figure 1. The pump radiation pulses 1 and the seed radiation pulses 2 are directed collinearly along a first beam path 12A into the multi-pass device 10. With each passage through four optically non-linear crystals 20, a portion of pump energy is transferred to the signal radiation 3 and the idler radiation 4. Again, back-conversion is suppressed by the extraction of the idler radiation 4 at each of the mirror elements 11. After propagation through the multi-pass device 10, the amplified signal pulses of the signal radiation 3 are separated from the remaining pump pulses 1 and recompressed with chirped mirrors 14A.

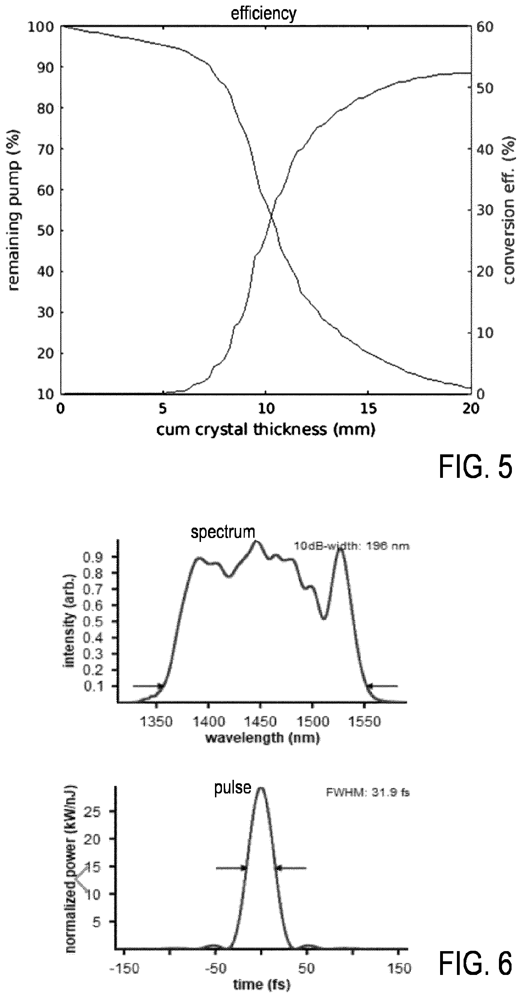

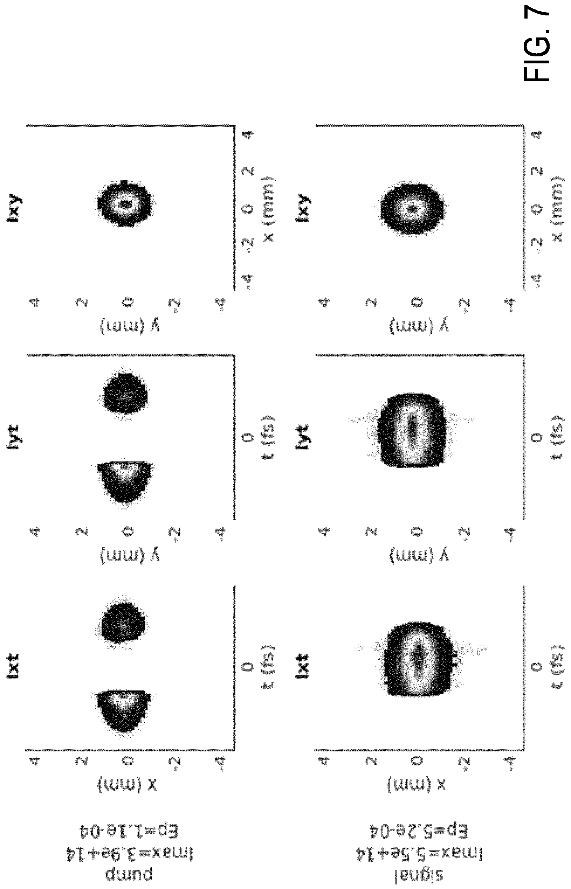

The example configuration of Figure 4 was tested employing the above example parameters via extensive numerical simulations using a commercial three-dimensional laser beam propagation code. Figures 5 to 7 illustrate simulation results obtained with the embodiment of the inventive optical parametric multi-pass apparatus 100 of Figure 4. Figure 5 shows the conversion efficiency of the optical parametric multi-pass apparatus 100 as a function of pass number through the multi-pass device 10 including linear mirror and crystal losses, Figure 6 illustrates the amplified signal spectrum and compressed pulse shape and duration by applying -7000 fs² group delay dispersion, and Figure 7 shows spatio-temporal beam profiles of pump and signal pulses after after amplification [Iₘₐₓ (W/m²) & Ep (J)].

The key results of Figures 5 to 7 show that conversion efficiencies larger 50% can be obtained with considering realistic experimental settings including second and third order non-linear effects, laser damage thresholds of mirrors and coatings and conservative linear losses. Even higher efficiencies are possible by optimizing the linear losses caused by crystal antireflective coatings in the example. A rather smooth broadband power distribution compared to post pulse compression schemes allows for compressing the pulses to 30 fs by applying -7000 fs² of second order dispersion. The spatio-temporal 3D beam profiles of pump and signal radiation 1, 3 after amplification show the almost complete pump depletion without visible back conversion as well as a very good signal beam quality.

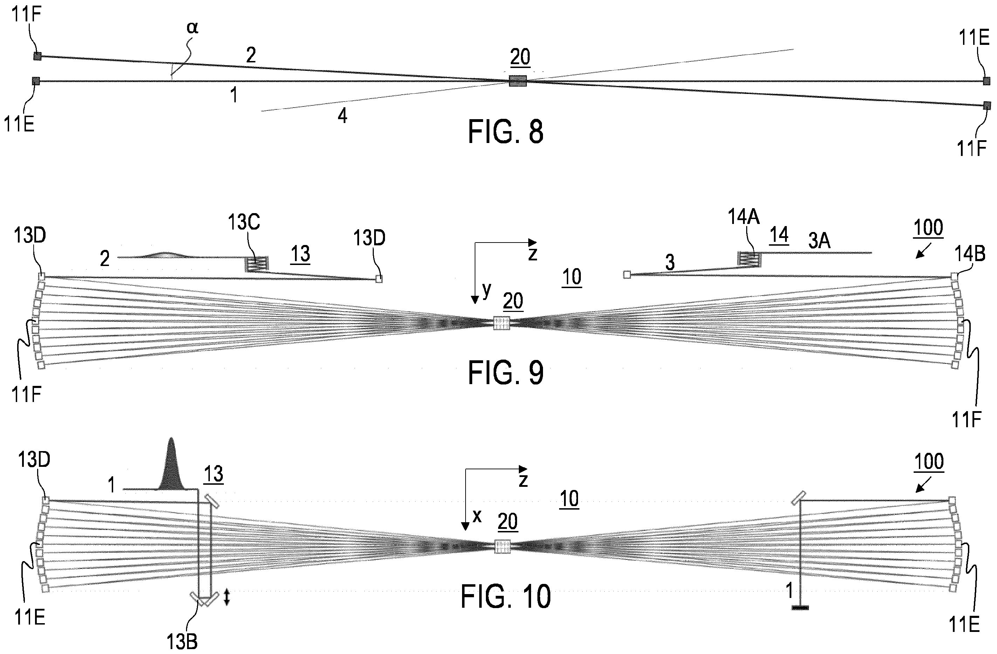

Figures 8 to 10 illustrate a non-collinear embodiment of the inventive inventive optical parametric multi-pass apparatus 100, wherein Figure 8 shows the principle of employing the non-collinear geometry and Figures 9 and 10 represent the beam geometry of the mirror elements used for deflecting the pump radiation 1 and seed radiation 2, resp., through the optically non-linear crystals 20. Parts of the optical parametric multi-pass apparatus 100 which are correspondingly shown in Figures 1 and 4 are indicated with similar reference numerals like in Figure 1. Parameters of the optical parametric multi-pass apparatus 100 of Figures 9 and 10 may be implemented as mentioned with reference to Figures 1 and 4.

The pump radiation 1 and seed radiation 2 generated with a mutual external non-collinear angle α propagate via different mirror elements in the multi-pass device 10. The mirror elements deflecting the pump radiation 1 are called pump mirrors 11E, and the mirror elements deflecting the seed radiation 2 are called seed mirrors 11F (or: signal mirrors) . In Figure 8, only the first and second pump mirrors 11E and the first and second seed mirrors are shown.

According to Figures 9 and 10, the multi-pass device 10 is configured for the spectral filtering of the idler radiation 4 by a geometric separation of the idler radiation 4 out of the beam path of the multi-pass device 10. After coupling into the multi-pass device 10, the external non-collinear angle α is kept, so that the pump radiation 1 and seed radiation 2 propagate through the optically non-linear crystals 20 with this angle. At each pass through one of the optically non-linear crystals 20, the idler radiation 4 is created with a deviating direction out of the beam paths of the multi-pass device 10, so that the idler radiation 4 cannot contribute to further energy conversion processes in subsequent passes through the one of the optically non-linear crystals 20. Advantageously, a 100% idler radiation suppression is obtained, even between multiple optically non-linear crystals.

Due to the 100% idler radiation suppression, further advantages are obtained for the mirror element design, in particular relaxed requirements for mirror coatings. The pump mirrors 11E may be provided with narrowband pump mirror coatings, which have advantages in terms of simple design and low costs. Furthermore, the seed mirrors 11F may be provided with seed mirror coating only specified for seed spectral width and constant group delay dispersion. Furthermore, any anti-reflective coatings in multi-crystal case do not need to be reflective for idler radiation, and a flexible pump-seed group multi-pass device 10 pass delay optimization is obtained.

The practical implementation of the non-collinear embodiment is shown in Figures 9 and 10, wherein Figure 9 shows the beam path of the seed mirrors 11F of the multi-pass device 10 and Figure 10 shows the beam path of the pump mirrors 11E of the multi-pass device 10. The seed mirrors 11F may be arranged as a linear array extending e.g., along the y direction perpendicular to the axial z direction (Figure 9), while the pump mirrors 11E may be arranged as a linear array as well, extending along another direction, e.g., the x direction, perpendicular to the axial z direction (Figure 10).

Seed pulses of the seed radiation 2 are coupled into the multi-pass device 10 via the dispersive mirrors 13C and mode-matching mirrors 13D (see Figure 4) for propagating multiple passes through the optically non-linear crystals 20. Simultaneously, pump pulses of the pump radiation 1 are coupled into the multi-pass device 10 via the delay stage 13B for propagating multiple passes through the optically non-linear crystals 20. With the mode-matching mirrors 13D and the delay stage 13B, the spatial and temporal superposition of the pump radiation 1 and the seed radiation 2 in the optically non-linear crystals 20 is adjusted. With each pass through one of the optically non-linear crystals 20, energy is converted from the pump radiation 1 to signal radiation 3, which is coupled via an imaging mirror 14B to the chirped mirrors 14A for generating the compressed laser pulses to be obtained. Simultaneously, the idler radiation 4 (not shown in Figures 9 and 10) is deflected out of the multi-pass device with each pass through one of the optically non-linear crystals 20.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the sub claims independently of the features and claims to which they refer.

## Claims

1. Optical parametric multi-pass apparatus (100), being configured for generating laser radiation by an optical parametric amplification or generation process, wherein pump radiation (1) is converted into signal radiation (3) and idler radiation (4), comprising
- a multi-pass device (10) having multiple mirror elements (11), which are arranged for providing multiple beam paths (12) extending from an input section (13) to an output section (14) of the multi-pass device (10), wherein the input section (13) is arranged for receiving the pump radiation (1) and the output section (14) is arranged for an output of the signal radiation (3) providing the laser radiation to be generated, and
- at least one optically non-linear crystal (20) being positioned in the multi-pass device (10) and being arranged for the optical parametric process employing the pump radiation (1), wherein
- the mirror elements (11) have a configuration providing multiple passes of the beam paths (12) through the at least one optically non-linear crystal (20),
**characterized in that**
- the multi-pass device (10) is configured for a filtering along the beam paths (12) such that the idler radiation (4) is suppressed after at least one of the multiple passes of the beam paths (12) through the at least one optically non-linear crystal (20).

2. Optical parametric multi-pass apparatus according to claim 1, wherein the multi-pass device (10) is configured for the filtering by providing at least one of
- a filter element (15) in at least one of the beam paths (12), said filter element (15) being adapted for a selective reflection or transmission of at least one of the pump radiation (1), seed radiation (2) and the signal radiation (3) and being further adapted for a correspondingly selective transmission or absorption of the idler radiation (4),
- a geometric separation of the idler radiation (4) out of the beam path (12),
- a selective reflection of the idler radiation (4) out of the beam path (12), and
- a selective temporal shift of the idler radiation (4) in the beam path (12), preferably by applying a relative group delay between idler and signal radiation pulses larger than the signal pulse duration within at least one round trip in the multi-pass device (10).

3. Optical parametric multi-pass apparatus according to claim 2, wherein the multi-pass device (10) is provided with the filter element (15), which comprises
- a filter layer, in particular a dielectric coating, at at least one of the mirror elements (11), and/or
- a coated interface provided by the at least one optically non-linear crystal (20) and/or an additional window arranged in the at least one beam path, and/or
- an idler radiation absorbing gas arranged in the at least one beam path.

4. Optical parametric multi-pass apparatus according to one of the foregoing claims, comprising multiple optically non-linear crystals (20).

5. Optical parametric multi-pass apparatus according to claim 4, wherein
- the optically non-linear crystals (20) are serially arranged such that each of the multiple passes of the beam paths (12) runs through at least two of the optically non-linear crystals (20).

6. Optical parametric multi-pass apparatus according to claim 5, including at least one of the features
- the optically non-linear crystals (20) are oriented such that an overall spatial walk-off of the pump radiation (1) and signal radiation (3) passing through the serially arranged optically non-linear crystals (20) is compensated, and
- the optically non-linear crystals (20) are arranged with an inter-crystal distance between adjacent non-linear crystals (20), preferably being selected such that a strength of Kerr-lens focusing is reduced by partially compensated diffraction and deviations from non-linear mode-matching in the multi-pass device (10) are reduced.

7. Optical parametric multi-pass apparatus according to one of the foregoing claims, wherein
- the multi-pass device (10) has a configuration preventing relay imaging conditions from any plane across the multi-pass cell to the same plane upon consecutive passes through the multi-pass cell.

8. Optical parametric multi-pass apparatus according to one of the foregoing claims, wherein
- the mirror elements (11) of the multi-pass device (10) are arranged such that an angle between subsequent passes through at least one optically non-linear crystal (20) mainly changes in a non-critical crystal axis of the at least one optically non-linear crystal (20), said non-critical crystal axis being non-critical for phase-matching of the pump and signal radiation (1, 3).

9. Optical parametric multi-pass apparatus according to one of the foregoing claims, including at least one of the features
- a thickness of each optically non-linear crystal (20, 21, 22, 23, ...) is selected to be smaller than twice of a coherence length of phase-matching of pump radiation (1), signal radiation (3) and the idler radiation (4) for an intended optical parametric amplification amplification or generation bandwidth, and
- a thickness of each optically non-linear crystal (20) is selected such that there is no onset of back conversion in at least one of the multiple passes of the beam paths (12) through the at least one optically non-linear crystal (20).

10. Optical parametric multi-pass apparatus according to one of the foregoing claims, wherein
- the multiple mirror elements (11) are arranged for a collinear configuration with one single beam path of the pump radiation (1) and the signal radiation (3).

11. Optical parametric multi-pass apparatus according to claims 4 and 10, wherein
- the optically non-linear crystals (20) are arranged with a mutual displacement such that each of the multiple passes of the single beam path selectively runs through another one of the optically non-linear crystals (20).

12. Optical parametric multi-pass apparatus according to one of the claims 1 to 9, wherein
- the multiple mirror elements (11) are arranged for a non-collinear configuration with a first beam path (12A) of the pump radiation (1) and a different second beam path (12B) of the signal radiation (3), and
- the first and second beam paths (12A, 12B) overlap in the at least one optically non-linear crystal (20).

13. Optical parametric multi-pass apparatus according to one of the foregoing claims, further including:
- a group delay adjustment configuration being adapted for a group delay adjustment of the pump radiation (1) and the signal radiation (3).

14. Optical parametric multi-pass apparatus according to one of the foregoing claims, being adapted for an optical parametric amplification process, wherein the multi-pass device (10) is arranged for receiving and superimposing the pump radiation (1) and seed radiation and the at least one optically non-linear crystal (20) is arranged for converting the pump radiation (1) and the seed radiation into the signal radiation (3) and the idler radiation (4).

15. Optical parametric multi-pass apparatus according to claim 14, including at least one of the features
- the input section (13) includes a dichroic beam combiner, which is adapted for superimposing the pump and seed radiation in time and space, and
- the output section (14) includes a dichroic beam splitter, which is adapted for spectrally separating the pump and seed radiation.

16. Optical parametric multi-pass apparatus according to one of the claims 1 to 13, being adapted for an optical parametric generation, wherein the multi-pass device (10) is arranged for receiving the pump radiation (1) and the at least one optically non-linear crystal (20) is arranged for converting the pump radiation (1) into the signal radiation (3) and the idler radiation (4).

17. Optical parametric multi-pass apparatus according to one of the claims 1 to 13, being adapted for a four wave mixing process, wherein the multi-pass device (10) is arranged for receiving the pump radiation (1) comprising a first pump radiation and a second pump radiation and the multi-pass device (10) is arranged for superimposing the first pump radiation and the second pump radiation and the at least one optically non-linear crystal (20) is arranged for converting the first pump radiation and the second pump radiation into the signal radiation (3) and the idler radiation (4).

18. Laser apparatus (200), being configured for generating laser radiation, comprising
- a pump laser source device (210) being arranged for generating pump radiation (1), and
- an optical parametric multi-pass apparatus (100) according to one of the claims 1 to 17, being arranged for receiving the pump radiation (1) and for generating the signal radiation (3).

19. Method of generating laser radiation, comprising the steps of
- generating pump radiation (1) with a pump laser source device,
- generating the signal radiation (3) with an optical parametric multi-pass apparatus according to one of the claims 1 to 17, and
- output of the signal radiation (3).
